# EUROPÄISCHE PATENTSCHRIFT

(11) **EP 0 350 892 B1**
(45) Veröffentlichungstag und Bekanntmachung des Hinweises auf die Patenterteilung: **19.05.1993**
(21) Anmeldenummer: 89112753.2
(22) Anmeldetag: 12.07.1989
(51) Int. Cl.: C09D 5/44, C09D 163/00, C09D 5/03, C09D 201/00

(54) **Hitzehärtbare Überzugsmittel und deren Verwendung**
Heat-curable coating compositions and their use
Agents de revêtement thermodurcissables et leur utilisation

(30) Priorität: 13.07.1988 DE 3823731
(43) Veröffentlichungstag der Anmeldung: 17.01.1990
(73) Patentinhaber: Herberts Gesellschaft mit beschränkter Haftung, 42285 Wuppertal (DE)
(72) Erfinder: Grütter, Roland, Dr., D-5600 Wuppertal 1 (DE); Böhmert, Reiner, D-5657 Haan (DE); Reinecke, Rolf, Dr., D-6200 Wiesbaden (DE)
(74) Vertreter: Hrabal, Ulrich, Dr.

(56) Entgegenhaltungen:
- EP-A- 0 052 831
- DE-A- 2 409 837
- FR-A- 1 493 043
- FR-A- 1 562 121

## Beschreibung

Die Erfindung betrifft hitzehärtbare Überzugsmittel auf der Basis von zumindest zwei bei Lager- und Applikationstemperatur unverträglichen Bindemitteln mit unterschiedlich geladenen Ionen, die jedoch zu einer Interdiffusion unter thermischen Härtungsbedingungen führen. Die Überzugsmittel sind für verschiedene Auftragsweisen, wie z.B. Streichen, Spritzen, Tauchen und Elektrotauchlackierung mit anschließender Härtung durch Einbrennen geeignet.

Die Herstellung anionischer und kationischer Ionomerer ist bekannt. Auch wird in der Literatur beschrieben, daß aus der Mischung einer Lösung kationischer Ionomere mit einer Lösung anionischer Ionomere eine unlösliche Masse ausfällt ("RECENT ADVANCES IN ION-CONTAINING POLYMERS" von M.F.Hoover und G.B. Butler, J. Polymer Sci., Symposium No. 45, S. 16). Für die Lacktechnik wurde jedoch bisher keine Anwendungsmöglichkeit hierfür in Betracht gezogen. In den FR-Patentschriften 1 493 043, 1 493 044, 1 493 045 und 1 493 046 werden Copolymerisate beschrieben, die durch Ausfällung von anionischen und kationischen Polymeren erhalten werden, wobei eine gegenseitige Neutralisation stattgefunden hat. Die so fertiggestellten Copolymerisate können für verschiedene Anwendungszwecke, wie zur Folienbildung, zur Herstellung von Fasern und zur Herstellung von Überzügen verwendet werden.

Die Lackierung von Werkstücken in der Industrie wird hauptsächlich mit Überzugsmitteln durchgeführt, welche nach Applikation in Einbrennöfen durch Erhitzen auf Temperaturen zwischen 80 und 200°C gehärtet werden. Chemisch handelt es sich bei dieser Härtung meist um eine Vernetzung des Bindemittelsystems.

Bekannt sind selbst- und fremdvernetzende Bindemittelsysteme, die durch chemische Umsetzung aushärten. Die funktionellen Gruppen, welche bei der Vernetzung reagieren, können Hydroxylgruppen, Methylolgruppen, Aminogruppen, Epoxidgruppen, verkappte Isocyanatgruppen und Acetalgruppen sein. Während derartiger chemischer Härtungsvorgänge bilden sich oft Spaltprodukte, die physiologisch nicht unbedenklich sind. Auch sind manchmal Schwermetallverbindungen als Katalysator notwendig. Die chemische Vernetzung von Lackbindemitteln durch Einbrennen auf der Oberfläche eines Werkstückes ist prinzipiell schwierig und kompliziert, weil unter den gegebenen Bedingungen nur geringe Freiheitsgrade bestehen, die organische Reaktion zu steuern und zu modifizieren.

Aufgabe der Erfindung ist die Bereitstellung von Bindemittelsystemen bzw. Überzugsmitteln, die durch Einbrennen härtbar sind, und deren Vernetzung leicht steuerbar ist, ohne Spaltprodukte zu bilden oder ohne Härtungskatalysatoren, insbesondere Schwermetallkatalysatoren zu erfordern.

Es hat sich gezeigt, daß diese Aufgabe gelöst werden kann durch die erfindungsgemäße Bereitstellung von hitzehärtbaren Überzugsmitteln, enthaltend
A) ein oder mehrere zumindest bei Härtungstemperatur in flüssige oder gelöste Form überführbare Bindemittel mit sauren, basischen oder gleichartig geladenen ionischen Gruppen
B) ein oder mehrere zumindest bei Härtungstemperatur in flüssige oder gelöste Form überführbare Bindemittel mit basischen, - falls (A) saure Gruppen hat -, sauren, - falls (A) basische Gruppen hat -, oder gleichartig geladenen ionischen Gruppen mit zu den ionischen Gruppen von (A) entgegengesetzter Ladung, das bei Lager- und Applikationsbedingungen nicht interdiffundierbar, aber bei Härtungsbedigungen mit dem Bindemittel (A) interdiffundierbar ist wobei mindestens eines der Bindemittel (A) und (B) bei Applikations- und Lagertemperaturen in fester teilchenförmiger Form vorliegt und
C) gegebenenfalls übliche Lösemittel, Pigmente, und/oder lacktechnisch übliche Hilfs- und/oder Zusatzstoffe, die zu keiner Interdiffusion der Bindemittel (A) und (B) unter Lagerungs- und Applikationsbedingungen führen.

Beim Härten durch Einbrennen schmelzen die Bindemittelkomponenten A) und B) und diffundieren ineinander. Auf diese Weise kommt es zu einer Vernetzung, z.B. durch Verknüpfung der funktionellen, z.B. entgegengesetzt geladenen ionischen Gruppen von A) und B) und somit zu einer rein physikalischen Vernetzung der beiden Bindemittelkomponenten. Es ist weder eine schwer zu steuernde chemische Reaktion erforderlich, noch ist der Einsatz von Katalysatoren notwendig, oder werden unerwünschte Reaktionsspaltprodukte gebildet, wie sie bei der bisherigen kovalenten Vernetzung auftreten konnten.

Die Erfindung betrifft daher eine völlig neue Art von hitzehärtbaren Überzugsmitteln, die aus mindestens zwei sauren, basischen, bzw. ionischen, Bindemitteln (A) und (B) bestehen, wobei das Bindemittel (A) basische, saure bzw. entgegengesetzt geladene ionische Gruppen im Vergleich zum Bindemittel (B) enthält und wobei unter Lager- und Applikationsbedingungen keine Interdiffusion des Bindemittels (A) mit (B) möglich sein darf. Die Verschmelzung der Bindemittel tritt erst beim Erwärmen bzw. Erhitzen ein.

Die Verhinderung der Interdiffusion nach dem Zusammenmischen der Bindemittelkomponenten (A) und (B) wird dadurch erreicht, daß bei Raumtemperatur eine Unverträglichkeit des Bindemittels (A) mit dem Bindemittel (B) vorliegt.

Unter Verträglichkeit von verschiedenen Bindemitteln wird die Möglichkeit der völlig homogenen Vermischung der Bindemittel verstanden. Dementsprechend besteht bei Unverträglichkeit nicht die Möglichkeit, zu einer völlig homogenen Mischung zu gelangen.

Diese Unverträglichkeit kann auf verschiedene Art und Weise erreicht werden, z.B. durch den Molekülaufbau im Bindemittel, durch Verkapselung und durch verschiedene Glasübergangstemperaturen von Bindemitteln. So kann erfindungsgemäß beispielsweise eines der Bindemittel (A) und (B) fest und das andere flüssig oder in gelöster Form vorliegen. Eine gegenseitige Auflösung der Bindemittel (A) und (B) sollte dabei vermieden werden.

Eine weitere Möglichkeit besteht darin, daß beide Bindemittelkomponenten (A) und (B) in fester Form vorliegen.

In beiden vorstehenden Fällen liegen die festen Bindemittel bevorzugt in Teilchenform vor. Die Teilchengröße liegt vorzugsweise bei 0,05 bis 15 µm. Vorteilhaft wird die Interdiffusion der Bindemittel (A) und (B) bei Lager- und Applikationsbedingungen dadurch verhindert, daß die Glasübergangstemperatur (T_{g} nach DSC (Differential Scanning Calorometry)) zumindest eines der Bindemittel (A) oder (B) bei 40 bis 250°C, bevorzugt bei 50 bis 150°C und besonders bevorzugt bei 50 bis 130°C liegt. Die Glasübergangstemperatur des anderen Bindemittels (B) oder (A) kann dann unter diesen Werten liegen oder die gleichen Werte annehmen. Bei gleichen Werten erfolgt keine Interdiffusion. Bei niedrigeren Werten darf keine gegenseitige Auflösung oder Auflösung beider Komponenten in verwendeten Lösemitteln und/oder Weichmachern erfolgen.

Selbstverständlich ist es möglich und ggf. vorteilhaft als Bindemittel (A) und/oder Bindemittel (B) eine Kombination von zwei oder mehreren Bindemitteln einzusetzen, wenn sie der Definition von Bindemittel (A) oder (B) entsprechen.
Die Bindemittelkomponenten (A) und (B) enthalten ionische Gruppen entgegengesetzter Ladung in einem derartigen Ausmaß, daß eine gegenseitige Neutralisation unter Ausbildung einer wirksamen Verknüpfung bzw. Vernetzung der beiden Komponenten erfolgt, bzw. sie werden in entsprechenden Gewichtsmengen vermischt.

So enthält z.B. das Bindemittel (B) saure Gruppen, wenn es mit einem basischen Bindemittel (A) kombiniert wird, oder basische Gruppen in Kombination mit saurem Bindemittel (A).
Das Bindemittel (B) muß so beschaffen sein, daß die Interdiffusion mit Bindemittel (A) vermieden wird.
Die Bindemittel (A) oder (B) können Kunstharze, Naturharze oder modifizierte Kunstharze mit basischen oder sauren Gruppen sein, z.B. modifizierte Epoxidharze, Polymerisate aus Acrylverbindungen oder von Acrylverbindungen und Styrol und/oder Styrolderivaten, Polybutadienharze, Maleinatöle, Polyester, Alkydharze, Polyurethane, Polyaminoamidharze, modifizierte Epoxid-Kohlensäure-Amin-Umsetzungsprodukte, modifizierte Mannichbasen aus Bisphenol A, wenn sie eine ausreichende Menge an ionischen Gruppen tragen.
Unter Acrylverbindungen sind auch die 1-Alkylacrylate zu verstehen wie z.B. Methacryl-, Butacryl- und 2-Ethylhexacrylverbindungen.

Die Bindemittel (A) und (B) können als basische bzw. kationische Gruppen enthalten primäre, sekundäre und/oder tertiäre Aminogruppen mit aliphatischen, cycloaliphatischen und/oder aromatischen Resten, Sulfonium- und/oder Pyridinium- und/oder Pyridingruppen, Phosphoniumgruppen, und als saure bzw. anionische Gruppen Carboxylgruppen, Sulfonsäuregruppen, Phosphonsäuregruppen und/oder phenolische Hydroxylgruppen.

Bevorzugt werden Bindemittel mit Carboxylgruppen, Sulfonsäuregruppen, Phosphonsäuregruppen, phenolischen Hydroxylgruppen, Aminogruppen, Pyridiniumgruppen und Pyridingruppen verwendet.

Im folgenden werden Beispiele für erfindungsgemäß einsetzbare kationische oder anionische Bindemittel angegeben. Als kationische bzw. anionische Gruppen werden hier allgemein auch basische bzw. saure Gruppen bezeichnet, die in Kationen bzw. Anionen übergeführt werden können. Diese Beispiele werden aus Übersichtlichkeitsgründen gegliedert in
A) kationische (bzw. basische) oder anionische (bzw. saure) Bindemittel, die in flüssiger, gelöster oder fester Form (z.B. Teilchenform) in dem Bindemittelsystem bzw. Überzugsmittel vorhanden sein können, und
B) kationische (bzw. basische) oder anionische (bzw. saure) Bindemittel, die z.B. als entgegengesetzt geladene Bindemittel zusammen mit den Beispielen für (A) eingesetzt werden können und bevorzugt in fester Form (z.B. Teilchenform) im Bindemittelsystem bzw. Überzugsmittel vorliegen.

Beispiele der Bindemittel, die für (A) verwendet werden können:
Polyadditions-, Polykondensations- und/oder Polymerisationsprodukte mit einer zahlenmittleren Molmasse von 300 bis 10 000 g/mol, bevorzugt von 300 bis 5000 g/mol.
Als funktionelle Gruppen enthalten sie anionischer oder kationische Gruppen.

Sie können als kationische Gruppen z.B. enthalten primäre, sekundäre und/oder tertiäre Aminogruppen und/oder quaternäre Ammoniumgruppen mit aliphatischen, cycloaliphatischen und/oder aromatischen Resten, Pyridinium- und/oder Pyridingruppen. Sie können auch Sulfonium- und/oder Phosphoniumgruppen enthalten, wie sie in EP-A-59 895 beschrieben werden.

Als anionische Gruppen können sie z.B. enthalten Carboxylgruppen, Sulfonsäuregruppen, Phosphonsäuregruppen und/oder phenolische Hydroxylgruppen.
Bevorzugt werden Bindemittel (A) entweder mit Aminogruppen, quaternären Ammoniumgruppen und/oder Pyridingruppen und/oder Pyridiniumgruppen oder mit Carboxylgruppen, Sulfonsäuregruppen, Phosphonsäuregruppen und/oder phenolischen Hydroxylgruppen verwendet. Die Harzkomponente dieser Bindemittel kann z.B. ein Epoxidharz, Acrylat oder Polyaminoamid sein.

Beispiele für Bindemittel mit kationischen Gruppen sind bekannt als aminogruppenhaltige, modifizierte Epoxidharze, wie sie z.B. in EP-A-82 291, Seite 5, Zeile 21 bis Seite 7, Zeile 15, und in EP-A-66 859, Seite 5, Zeile 1 bis Seite 7, Zeile 7 beschrieben werden. Sie werden durch Reaktion von Epoxidharzen mit primären oder sekundären Aminen hergestellt. Als sekundäres Amin kann vorteilhaft das Diketimin des Diethylentriamins mit dem Epoxidharz zur Reaktion gebracht werden. Es ist bekannt, daß die Herstellung dieser Bindemittel auch in mehreren Stufen über Zwischenprodukte zur Bildung sequenzierter Bindemittel erfolgen kann (EP-A-66 859, Seite 20, Beispiel A6). Unter Epoxidharz werden in diesem Zusammenhang alle Polykondensations-, Polymerisations- und Polyadditionsprodukte verstanden, die reaktive Epoxidgruppen tragen, wie die Reaktionsprodukte von Polyphenolen, z.B. Bisphenol A und Novolak, mit Epichlorhydrin, und wie die Copolymerisate oder Homopolymerisate, welche unter Verwendung von epoxidgruppenhaltigen Monomeren hergestellt werden, wie z.B. unter Verwendung von Glycidyl(meth-)acrylat.

Eine Möglichkeit, Aminogruppen in das Bindemittel (A) einzuführen, liegt auch in der Verwendung von Aminoisocyanaten, die sich mit den Hydroxylgruppen eines Harzes, z.B. eines Epoxidharzes umsetzen lassen, wie es in DE-A-27 07 405 beschrieben ist.

Quaternäre Ammoniumgruppen lassen sich z.B. durch Umsetzung von Epoxidgruppen mit Salzen von tertiären Aminen in bekannter Weise einführen.

Bindemittel mit Aminogruppen, die als Bindemittel (A) verwendet werden können, sind z.B. auch die Reaktionsprodukte aus dimeren und/oder trimeren Fettsäuren mit Diethylentriamin und/oder Ethylendiamin, die unter der Bezeichnung Polyaminoamide bekannt sind.
Aminogruppen enthaltende Bindemittel werden auch durch Homo- oder Copolymerisation von ungesättigten Aminen, wie z.B. von Dimethylaminoacrylat, erhalten.

Erfindungsgemäß geeignete Bindemittel mit anionischen Gruppen sind bekannt, z.B. als Carboxylgruppen tragende fette Öle, synthetische Öle, fettsäure- oder ölmodifizierte Alkydharze, Polyester, modifizierte Naturharze, Acrylatharze und modifizierte Epoxidharze. Carboxylgruppentragende fette Öle werden z.B. aus Leinöl, Ricinenöl, Holzöl und/oder Sojaöl durch Umsetzung mit Maleinsäure oder Maleinsäureanhydrid hergestellt und sind als Maleinatöl bekannt. Carboxylgruppenhaltige synthetische Öle können aus Polybutadienöl und Maleinsäure bzw. Maleinsäureanhydrid hergestellt werden. Auch der Einsatz modifizierter Naturharze ist erfindungsgemäß möglich. Sie sind beispielsweise das Umsetzungsprodukt aus Kolophonium und Maleinsäureanhydrid (als Maleinatharz bekannt). Verwendbare modifizierte Epoxidharze mit Carboxylgruppen werden erhalten, wenn z.B. Epoxidharze aus Bisphenol mit Epichlorhydrin noch mit Wasser, Monocarbonsäuren, Ammoniak oder Aminen zu epoxidgruppenfreien Produkten und anschließend mit Säureanhydriden mehrbasischer organischer Säuren umgesetzt werden, wie in DE-A-15 20 210 und DE-A-15 20 219 beschrieben.
Beispiele für besonders bevorzugte Bindemittel (A):
Die besonders bevorzugten Bindemittel der Komponente (A) haben eine zahlenmittlere Molmasse von 300 bis 5000 g/mol und enthalten durchschnittlich mindestens 4 funktionelle Gruppen im Molekül. Sie sind z.B. Polyglycidylether der allgemeinen Formel 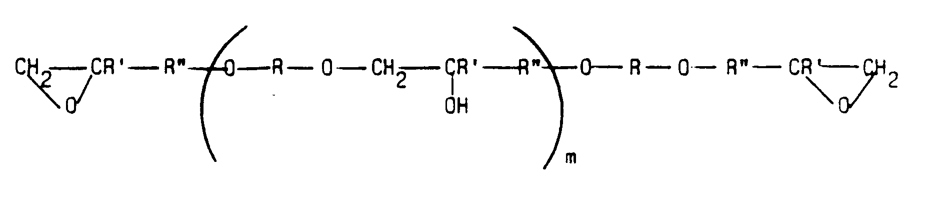
worin bedeuten 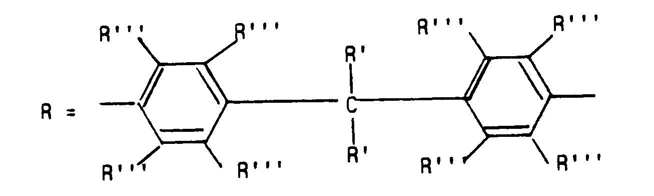
worin die Reste R' jeweils gleich oder verschieden und unabhängig davon die Reste R''' jeweils gleich oder verschieden sind und
R' = Wasserstoff oder -CₙH₂ₙ₊₁
R'' = -(CR'₂)ₙ-, worin R' wie vorstehend definiert ist,
R''' = Wasserstoff, -CₙH₂ₙ₊₁ oder Halogen, bevorzugt Wasserstoff
m = 0 bis 6
n = 1 bis 3
Die besonders bevorzugten Bindemittel (A) sind Umsetzungsprodukte von Epichlorhydrin mit Dioxydiphenylmethan (Bisphenol F) oder Dioxydiphenylpropan (Bisphenol A). Polyepoxide mit geeigneter Molmasse werden entweder durch Auswahl der Reaktionsbedingungen bei der Umsetzung des Bisphenols mit Epichlorhydrin oder durch Umsetzung einer niedrigmolekularen Diglycidylverbindung mit weiterem Bisphenol und/oder Monophenol und/oder Polyalkohol, wie Hexandiol-1.6, Polytetrahydrofurandiol, Polycaprolactondiol, Polycaprolactamdiol oder Polybutadiendiol oder Monoalkohol in Gegenwart von geeigneten basischen oder sauren Katalysatoren hergestellt.
Das Einführen von Aminogruppen in das besonders bevorzugte Bindemittel (A) kann z.B. durch Addition von NH-reaktiven Verbindungen an die Epoxidgruppen oder durch Umsetzung der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkohol entstehen (DE-A-27 07 405), erfolgen.
Als NH-reaktive Verbindungen können primäre Monoalkylamine wie Dialkylaminoalkylamin und/oder bevorzugt sekundäre Monoamine wie Dialkylamine, Monoalkylhydroxyalkylamine oder Dihydroxyalkylamine verwendet werden. Beispiele für einsetzbare Verbindungen sind Diethylamin, Dimethylaminopropylamin, N-Methylaminoethanol, Diethanolamin oder das Diketimin des Diethylentriamins. Bei Verwendung von primären Aminen oder sekundären Diaminen tritt eine Kettenverlängerung ein. Als sekundäre Diamine können auch Alkyldiaminoalkane oder Umsetzungsprodukte von gesättigten Glycidylethern mit primären Diaminoalkanen verwendet werden. Bevorzugt enthält das Bindemittel (A) pro Molekül durchschnittlich mindestens 2, bevorzugt mindestens 3 und besonders bevorzugt mindestens 4 kationische oder anionische Gruppen.

Im folgenden sind, wie vorstehend erwähnt, Beispiele für anionische oder kationische Bindemittel (B) angegeben, die bevorzugt in fester Form, z.B. Teilchenform, zusammen mit den entgegengesetzt geladenen Beispielen für (A), wie vorstehend angegeben, in den erfindungsgemäßen Überzügen bzw. Bindemittelkombinationen (A) und (B) eingesetzt werden können.

Generell werden als Bindemittel (B) vorteilhaft solche Bindemittel verwendet, deren Glasübergangstemperatur zwischen 40 und 250°C, bevorzugt zwischen 50 und 150°C und besonders bevorzugt zwischen 50 und 130°C liegt, wobei das Bindemittel (A) entweder Glasübergangstemperaturen der gleichen Bereiche aufweist oder in flüssiger oder gelöster Form vorliegt und das Bindemittel (B) unter Lager- und Applikationsbedingungen nicht anlöst oder anquillt.

Eine bevorzugte Herstellungsmethode für das Bindemittel (B) in Teilchenform ist die Emulsionspolymerisation von Acrylverbindungen und/oder Vinylverbindungen oder von Acrylverbindungen und/oder Vinylverbindungen mit Styrol und/oder Styrolderivaten. Für das Bindemittel (B) eignen sich auch sehr gut Harz- und Lackpulver, die auf Teilchengrößen von z.B. unter 15 µm vermahlen worden sind. Beispiele der Bindemittel, die für (B) verwendet werden können:
Polykondensations-, Polyadditions- und/oder Polymerisationsprodukte mit einer zahlenmittleren Molmasse von mindestens 2000 g/mol, bevorzugt mindestens 5000 g/mol, insbesondere mindestens 50 000 g/mol und besonders bevorzugt mindestens 100 000 g/mol. Die obere Grenze unterliegt keiner Begrenzung und kann z.B. bei 10⁷ g/mol liegen. (Die Begriffe Polykondensation, Polyaddition und Polymerisation werden in Chemische Technologie von Winnacker-Küchler, Band 6, Organische Technologie II, Carl Hanser Verlag München - Wien 1982, Seite 313 bis 323, erklärt.)

Die Bindemittel (B) können bevorzugt als Homopolymerisate oder Copolymerisate hergestellt werden durch Emulsionspolymerisation, Suspensionspolymerisation, Substanzpolymerisation und Lösungspolymerisation, wie es in der Chemischen Technologie von Winnacker-Küchler, Band 6, Organische Technologie II, Carl Hanser Verlag München - Wien 1982, Seite 775 bis 787, beschrieben wird.
Besonders bevorzugt zur Herstellung der Bindemittel (B) sind die Emulsions- und Suspensionspolymerisation.
Als funktionelle Gruppen enthalten sie die anionischen oder kationischen Gruppen. Als anionische Gruppen können die Bindemittel z.B. (B) Carboxylgruppen, Sulfonsäuregruppen, Phosphonsäuregruppen und phenolische Hydroxylgruppen enthalten.

Die Säuregruppen werden in das Bindemittel (B) z.B. durch Polymerisation zum Homo- oder Copolymerisat und/oder polymeranalogen Umsetzungen an geeigneten Polymeren durch z.B. ungesättigte Säuren, wie (Alk-)Acrylsäure, Crotonsäure, Itaconsäure, Maleinsäure, Maleinsäureanhydrid, Fumarsäure, Phthalsäureanhydrid oder dessen Hydrierungsprodukte, Sulfoethyl(meth-) acrylat, Amidomethylpropansulfosäure (AMPS) und Vinylphosphonsäure, eingeführt.

Als Monomere, welche in das Bindemittel anionische Gruppen einführen können, eignen sich z.B. auch ungesättigte Verbindungen, wie z.B. Phenole mit ungesättigten Ketten am aromatischen Ring wie Vinylphenole oder solche Monomere, bei welchen während oder nach der Polymerisation saure Gruppen gebildet werden können, wie z.B. 4-Hydroxystyrolacetat.

Eingesetzt werden können auch Produkte, erhalten durch Herstellung eines Copolymeren oder Homopolymeren mit Hydroxyalkyl(meth-)acrylat und die vollständige oder partielle Umsetzung der Hydroxylgruppen mit Säureanhydriden von organischen Di- oder Polycarbonsäuren, wie Maleinsäureanhydrid, Phthalsäureanhydrid oder deren Hydrierungsprodukte. Als kationische Gruppen sind z.B. geeignet primäre, sekundäre, tertiäre Aminogruppen, quaternäre Ammoniumgruppen, Pyridingruppen, Pyridiniumgruppen, Sulfoniumgruppen und Phosphoniumgruppen.

Die basischen Gruppen können in das Bindemittel z.B. durch Homo- oder Copolymerisation von ungesättigten Aminen, wie z.B. Dimethylaminoacrylat, Allylamin, Vinylpyridin und dessen Derivate, und/oder durch polymeranaloge Umsetzungen an geeigneten Polymeren, eingeführt werden. Vorteilhaft ist auch die Herstellung eines Copolymeren oder Homopolymeren mit Glycidyl(meth-)acrylat und die vollständige oder partielle Umsetzung der Epoxidgruppen mit sekundären Aminen, darunter auch mit dem Diketimin des Diethylentriamins, und/oder mit Salzen von tertiären Aminen, z.B. mit Dimethylaminlactat.

Die durchschnittliche Anzahl der funktionellen Gruppen im Molekül richtet sich nach dem Reaktionspartner. Während aber eine Vernetzung durch kovalente Verknüpfung bereits gegeben sein kann, wenn die Moleküle der einen Reaktionskomponente im Durchschnitt mindestens zwei funktionelle Gruppen und der anderen Reaktionskomponente im Durchschnitt mindestens drei funktionelle Gruppen aufweisen, sind bei der Verknüpfung über Ionenpaarbindungen mehr funktionelle Gruppen pro Molekül notwendig. Das Bindemittel (B) sollte im Durchschnitt pro Molekül mindestens 5, bevorzugt mindestens 15 und besonders bevorzugt mindestens 30 funktionelle Gruppen aufweisen.

Die Bindemittel (B) werden bevorzugt und zweckmäßig in Form einer wässrigen oder nicht-wässrigen Dispersion, z.B. der bei ihrer Herstellung erhaltenen, eingesetzt oder als Pulver, z.B. nach Sprühtrocknung einer Dispersion, bzw. als gemahlenes Kunstharz- oder Lackpulver.
Die Teilchengröße, in der sich das Bindemittel (A) oder (B) und insbesondere (B) vor der Applikation befindet, liegt zwischen 0,05 und 15 µm, bevorzugt zwischen 0,05 und 2 µm und besonders bevorzugt zwischen 0,1 und 2 µm. Geeignet sind sowohl mono- als auch polydisperse Verteilungen der Teilchen.
Die Herstellung weiterer geeigneter Bindemittel (B) in der bevorzugten Teilchenform kann im Prinzip in der gleichen Weise erfolgen, wie sie für Bindemittel (A) beschrieben ist, wenn dadurch Bindemittel entstehen, die in feinteilig fester Form verwendet werden können.

Die vorstehend als Beispiele angegebenen Bindemittel (A) und (B) liegen im Überzugsmittel im Massenanteilverhältnis von
90 % bis 10 % Bindemittel (A) und 10 % bis 90 % Bindemittel (B), bevorzugt 75 % bis 25 % Bindemittel (A) und 25 % bis 75 % Bindemittel (B), und besonders bevorzugt 60 % bis 40 % Bindemittel (A) und 40 % bis 60 % Bindemittel (B)
vor.

Die erfindungsgemäßen Bindemittel-Kombinationen bzw. Überzugsmittel können übliche Zusätze enthalten, die jedoch keine Interdiffusion der Komponenten (A) und (B) vor dem Einbrennvorgang bedingen dürfen.

Beispielsweise enthalten die härtbaren Überzugsmittel außer den Bindemitteln (A) und (B) ggf. weitere Lackrohstoffe, die nicht unbedingt ionisch sein müssen wie z.B. Bindemittel, Weichmacher, Pigmente, Füllstoffe, Lackpulver, Harzpulver, Additive (Antischaummittel, Antikratermittel, Haftverbesserungsmittel, Mittel zur Verlaufsverbesserung, Katalysatoren u.a.) und organische Lösungsmittel.

Als organische Lösungsmittel kommen solche in Frage, die nur eine der Komponenten bei Lager- und Applikationsbedingungen anlösen oder anquellen. Für die Anwendung in Elektrotauchbädern, insbesondere kationischen, eignen sich als Zusatzlösungsmittel z.B. bevorzugt Hexylglykol, Butylglykol, 2,2,4-Trimethyl-1,3-pentandiolmonoisobutyrat oder Gemische davon.

Die Zugabe von Schwermetallverbindungen, z.B. als Härtungskatalysator, ist nicht notwendig, wird jedoch nicht grundsätzlich ausgeschlossen.
Die Verwendung von üblichen ernetzungsmitteln ist ebenfalls nicht notwendig. Es können aber ggf. weitere Vernetzungsmittel wie z.B. Harnstoffharze, Triazinharze, Phenolharze, verkappte Isocyanate, umesterungs- und umamidierungsfähige Vernetzungsmittel, acetalfunktionelle Vernetzungsmittel und Harnstoffkondensationsprodukte (z.B. nach DE-A-33 25 061) zugegeben werden.

Es ist hinlänglich bekannt, daß eine Kombination verschiedener Vernetzungsmittel mit verschiedener Reaktivität eine Fülle von lacktechnischen Verbesserungen bewirken kann. Bei Verwendung der erfindungsgemäßen Überzugsmittel als wasserverdünnbare Lacke werden übliche Neutralisationsmittel, beispielsweise für das Bindemittel (A) verwendet, wie anorganische und organische Säuren, wenn das Bindemittel (A) basische Gruppen enthält, bzw. Alkalihydroxide, Amine, Alkanolamine und Ammoniak für saures Bindemittel (A). Bevorzugt werden Ameisensäure, Essigsäure, Propionsäure, Milchsäure, Gallussäure, Phosphorsäure, Alkylphosphorsäuren und Kohlensäure eingesetzt.

Andere saure Verbindungen, die chemisch nicht direkt zur Gruppe der Säuren zählen wie Phenole, z.B. Pyrogallol, sind ebenfalls verwendbar.
Die bevorzugten basischen Neutralisationsmittel sind Amine und Alkanolamine mit Molmasse bis 200 g/mol, besonders bevorzugt bis 150 g/mol.
Die erfindungsgemäßen Bindemittel-Kombinationen bzw. Überzugsmittel sind für verschiedene Auftragsmethoden geeignet. Sie können beispielsweise aufgetragen werden durch die bekannten Lackiermethoden wie Spritzen, Rollen, Streichen, Tauchen, Walzen und Elektrotauchlackierung auf die Oberfläche von geeigneten Werkstücken. Beim Erwärmen bzw. Einbrennen auf 80 bis 250 °C wird der Beschichtungsfilm gehärtet.

Eine bevorzugte Ausführungsform ist die Elektrotauchabscheidung. Zur Elektrotauchabscheidung wird in wäßriger Dispersion gearbeitet. Hierzu ist es erforderlich, daß eine der Harzkomponenten (A) oder (B) teilchenförmig vorliegt. Die zweite Komponente ist bevorzugt in Wasser dispergierbar. Um die Dispergierbarkeit der flüssigen Komponente zu erzielen, kann es notwendig sein, einen Säure- oder Basenzusatz vorzunehmen. Beispielsweise wird beim Vorliegen von Aminogruppen in der dispergierbaren Komponente ein Säurezusatz erforderlich sein. Es ist günstig und zweckmäßig, die beiden Komponenten (A) und (B) in der wäßrigen Dispersion kräftig zu vermischen, um eine homogene Verteilung zu erzielen. Ohne an die folgende Theorie gebunden zu sein, ist davon auszugehen, daß voraussichtlich eine Umhüllung der festen teilchenförmigen Komponente mit der flüssigen dispergierten Komponente erfolgt, wodurch ein nach außen hin einheitlich geladenes umhülltes Teilchen entsteht, das aus der wäßrigen Dispersion elektrisch abgeschieden werden kann. Die homogene Verteilung der Bindemittel (A) und (B) kann beispielsweise durch Vermahlen der beiden Komponenten (A) und (B) in wäßrigem Medium in einem üblichen Mahlaggregat erfolgen. Beispiele für derartige Mahlaggregate sind Kugelmühlen, insbesondere Rührwerkskugelmühlen, wie Perlmühlen usw. Es ist auch möglich, daß ein Teil des flüssigen Bindemittels (A) oder (B) im Überschuß vorhanden ist. Die dispergierten Bindemittel können durch übliche Zusätze und/oder Pigmente, wie sie auf dem Gebiet der Elektrotauchlackierung eingesetzt werden, modifiziert werden. Aus derartigen Bädern können die Überzugsmittel auf einem Substrat, das eine hohe elektrische Leitfähigkeit aufweist, z. B. Stahl oder Aluminium, nach dem üblichen Elektrotauchlackierverfahren abgeschieden werden. Anschließend wird das Substrat in üblicher Weise gehärtet und weiter behandelt.

Der so durch Elektrotauchabscheidung erhaltene Film kann beispielsweise als ein Substrat für weitere Beschichtungen dienen. Selbstverständlich kann ein weiterer Überzug auch vor der Härtung der ersten Schicht im naß-in-naß-Verfahren gegebenenfalls nach einer kurzen Vortrocknung aufgebracht werden.

Die Anwendung der Überzugsmittel nach der vorliegenden Erfindung bietet als Vorteile, daß theoretisch keine Spaltprodukte entstehen, und praktisch keine Isocyanatverbindungen und Schwermetallverbindungen eingesetzt zu werden brauchen. Ein besonderer Vorteil für die Lackierung von Autokarossen ist die hervorragende Steinschlagfestigkeit, die sich mit Überzügen der vorliegenden Erfindung erzielen läßt.
Die durchgeführte Vernetzung der eingebrannten Beschichtung bietet bei Raumtemperatur alle Vorteile, die auch eine kovalente Verknüpfung bietet, ist jedoch reversibel. Bei hohen Temperaturen, z.B. über 100 °C, können sich je nach Ionenkonzentration und Trägerpolymer Einzelpunkte der gebildeteten Netzstruktur wieder öffnen. Diese Eigenschaft bietet den Vorteil, daß die Haftung von thermisch vernetzenden Nachfolgeschichten deutlich verbessert wird.

Ein weiterer Vorteil des Verfahrens liegt in der Möglichkeit, daß Bindemittel, die auch nach dem Einbrennen nicht miteinander verträglich sind, durch die Einführung von entgegengesetzt geladenen Gruppen einen homogenen, klaren Film nach dem Einbrennbrennprozeß bilden.
Beispielsweise bildet ein Gemisch aus Polystyrol und Polybutadienöl auch nach Erhitzen auf 150°C einen inhomogenen, matten Film. Wird ein genügend Carboxylgruppen enthaltendes Polybutadienöl (als flüssiges Bindemittel) und ein genügend Aminogruppen enthaltendes Polystyrol (als Harzpulver) auf ein Blech aufgetragen und auf 150°C erwärmt, so entsteht ein homogener, klarer Film.
Die Einführung von Carboxylgruppen in Polybutadienöl gelingt z.B. durch Reaktion des Öls mit Maleinsäureanhydrid und Aufspaltung des Anydridrings mit Wasser oder Methanol, wie es bekanntlich für Bindemittel praktiziert wird, die in Wasserlacken, einschließlich anodisch abscheidbaren Elektrotauchlacken, verwendet werden.
Die Einführung von Aminogruppen in Polystyrol kann durch Copolymerisation von Styrol mit Vinylpyridin erfolgen. Die Einführung ionischer Gruppen in nur eines der beiden Bindemittel, z.B. nur in Polybutadienöl, führt nicht zur Verträglichkeit der beiden verschmolzenen Bindemittel.
Die jeweils notwendige Menge an Carboxylgruppen und Aminogruppen in den beiden Bindemitteln kann leicht durch entsprechende Versuche ermittelt werden.

Die Überzugsmittel nach der vorliegenden Erfindung können ihre Anwendung finden als lösungsmittelfreie und lösungsmittelarme Lacke, (High Solids), Non Aqueous Dispersions (Dispersionen in organischen Flüssigkeiten), wasserverdünnbare Lacke und Elktrotauchlacke. Die Verwendung in Elektrotauchlacken stellt eien bevorzugte Ausführungsform dar, insbesondere in solchen zur kathodischen Abscheidung. Eine weitere bevorzugte Ausführungsform stellt die Anwendung in Pulverlacken dar. Das Bindemittel (A) ist ein Kunstharz, Naturharz oder modifiziertes Naturharz mit basischen oder sauren Gruppen. Für den Einsatz in wasserverdünnbaren Lacken, wozu auch Elektrotauchlacke zählen, kann es nach Neutralisierung oder Teilneutralisierung in bekannter Weise in Wasser gelöst oder dispergiert werden.
Alle Prozentangaben in den folgenden Beispielen beziehen sich, wenn nicht anders angegeben, auf Massenanteile.

### Herstellungsbeispiele:

### Bindemittel A1 mit Amingruppen

Gemäß EP-A-82 291, Seite 11, Komponente A2, werden 190 g Bisphenoldiglycidylether (1 Epoxidäquivalent) und 1425 g Bisphenolglycidyläther (3 Epoxidäquivalente) bei 100 °C in 597 g 2-Ethoxyethanol gelöst. Die Lösung wird auf 60 °C gekühlt und mit 126 g Diethanolamin versetzt. Man steigert die Temperatur während 2 Stunden langsam auf 80 °C. Anschließend werden 169 g N,N-Diethylpropandiamin-1,3 zugegeben und die Temperatur in 2 Stunden auf 120 °C gesteigert. Bei dieser Temperatur werden 478 g des Glycidylesters einer C₉ - C₁₁-Monocarbonsäure, deren Carboxylgruppe an ein tertiäres C-Atom gebunden ist, zugegeben, und anschließend 5 Stunden bei 130 °C unter Rühren belassen. Man verdünnt mit 2-Ethoxyethanol auf 60 % Harzgehalt. Das Festharz hat eine Aminzahl von 91 mg KOH/g und eine Hydroxylzahl von 265 mg KOH/g.

### Bindemittel A2 mit Amingruppen

Gemäß EP-B-12 463 werden 301 g Diäthanolamin, 189 g 3-(N,N-Dimethylamino)propylamin und 1147 g eines Adduktes aus 2 mol Hexandiamin-1,6 und 4 mol Glycidylester der Versaticsäure zu 5273 g Bisphenol-A-Epoxidharz (Epoxidäquivalentgewicht ca. 475) in 3000 g Ethoxypropanol gegeben. Das Reaktionsgemisch wird 4 Stunden unter Rühren bei 85 ° bis 90 °C und dann 1 Stunde bei 120 °C gehalten. Anschließend wird mit Ethoxypropanol auf einen Festkörper von 60 % verdünnt.

### Bindemittel A3 mit Aminogruppen

Es werden 385 g Bindemittel nach Beispiel A2 und 122 g Vernetzer C1 gemischt und im Vakuum bei einer Temperatur < 60°C das Lösungsmittel bis zu einem Festkörper von 85 % abdestilliert. Dann wird mit 6,9 g Essigsäure (100 %) innig vermischt und langsam unter gutem Rühren 500 g vollentsalztes Wasser (T ca. 35°C) dazugegeben. Es wird mit weiterem Wasser auf einen Festkörper von 33 % eingestellt.

### Bindemittel A4 mit Aminogruppen

Es wird ein Bindemittel nach A2 hergestellt mit der Maßgabe, daß nach Ende der Synthese das Lösungsmittel im Vakuum abdestilliert wird. Das entstehende Produkt erstarrt nach dem Erkalten und hat eine Aminzahl von ca. 80.

### Bindemittel B1 mit Carboxylgruppen

Die Emulsionspolymerisation wird entsprechend der üblichen Verfahren, wie sie in Hölscher, Dispersionen synthetischer Hochpolymerer Teil 1, Springer Verlag 1969 in Kapitel 2.1.6 beschrieben sind, durchgeführt:
In einem Reaktor wird eine Flotte, bestehend aus 25 g einer 30%igen Alkansulfonatlösung in 875 g voll entsalztem Wasser (VEW) vorgelegt. Aus 788 g vollentsalztem Wasser, 108 g einer 30%igen Alkansulfonatlösung, 1277 g Styrol, 639 g Acetoxystyrol und 144 g Acrylsäure wird eine Voremulsion hergestellt. Die Polymerisation wird bei 50 °C durchgeführt. Das Initiatorsystem (Redoxsystem) besteht aus 4 g Wasserstoffperoxid in 70 g vollentsalztem Wasser und 4 g Ascorbinsäure in 70 g vollentsalztem Wasser. Zur Flotte werden 75 g Voremulsion gegeben und bei 50 °C wird unter Stickstoff mit einem Viertel der Initiatorlösung gestartet. Der Rest wird jeweils in 3 Stunden dosiert.

Nach dem Ende der Dosierung wird noch eine Stunde ein Redoxsystem aus den gleichen Bestandteilen hinzugefügt wie vorher.
Man erhält eine feinteilige, koagulatfreie Dispersion mit 50 % Feststoffgehalt.

### Bindemittel B2 mit Carboxylgruppen

Eine Emulsionspolymerisation wird entsprechend dem Beispiel Bindemittel B1 durchgeführt, jedoch mit folgenden anderen Monomerenmengen:
1200 g Styrol, 800 g Acetoxystyrol und 60 g Acrylsäure.

### Bindemittel B3

Die Emulsionspolymerisation wird entsprechend der üblichen Verfahren, wie sie im Beispiel Bindemittel B1 angegeben wird, durchgeführt.
In den Reaktor wird eine Flotte, bestehend aus 15 g eines Alkyltrimethylammoniumchlorids in 975 g vollentsalztem Wasser vorgelegt. Aus 543 g Styrol und 17 g Acrylsäure wird eine Monomerlösung hergestellt. Die Initiatorlösung besteht aus 1 g einer wasserlöslichen Azoverbindung in 50 g vollentsalztem Wasser. die Polymerisation wird bei 80°C durch Zugabe von 50 g der Monomerlösung und 20 g der Initiatorlösung gestartet. Die restlichen Mengen werden parallel in 3 Stunden dosiert. Es wird noch 2 weitere Stunden bei 80 °C polymerisiert.

### Bindemittel B4

Eine Emulsionspolymerisation wird entsprechend dem Beispiel B3 durchgeführt, jedoch mit Methacrylsäure statt Acrylsäure.

### Bindemittel B5

Wie Bindemittel B3, jedoch mit den Monomerenmengen 326 g Styrol, 217 g Acetoxystyrol und 17 g Acrylsäure.

### Bindemittel B6

Wie Bindemittel B5, jedoch mit Methacrylsäure statt Acrylsäure.

### Bindemittel B7

Wie Bindemittel B3, jedoch mit den Monomerenmengen 543 g Acetoxystyrol und 17 g Acrylsäure.

### Bindemittel B8

Wie Bindemittel B7, jedoch mit Methacrylsäure statt Acrylsäure.

### Bindemittel B9

Wie Bindemittel B3, jedoch mit 504 g Acetoxystyrol und 56 g Acrylsäure.

### Bindemittel B10

Wie Bindemittel B9, jedoch mit Methacrylsäure statt Acrylsäure.

### Bindemittel B11

Wie Bindemittel B3, jedoch mit den Monomerenmengen 476 g Acetoxystyrol und 84 g Acrylsäure.

### Bindemittel B12

Wie Bindemittel B11, jedoch mit Methacrylsäure statt Acrylsäure.

### Bindemittel B13

Wie Bindemittel B3, jedoch mit den Monomerenmengen 476 g Acetoxystyrol, 42 g Methacrylsäure und 42 g Acrylsäure.

### Bindemittel B14

Wie Bindemittel B3, jedoch mit den Monomermengen 112 g Methacrylsäure und 448 g Methyl-Methacrylat. Die entstehende Emulsion wird zu einem nicht klebenden Pulver sprühgetrocknet.

### Bindemittel B15

In einer Apparatur, bestehend aus einem Reaktionskolben, einem gut wirksamen Rührer, einer Kolonne, einer Destillationsbrücke, Vorlage sowie Thermometern zur Kontrolle der Guttemperatur und der Dampfübergangstemperatur werden unter schwachem Überleiten von Stickstoff 1 Mol Glycerin, 2,8 Mol Propylenglykol sowie 0,4 % Zinkacetat, bezogen auf das gesamte Rezept, vorsichtig auf 120°C erwärmt. Es werden 2 Mol Dimethylterephtalat hinzugefügt und auf 175°C erhitzt. Man heizt nun weiter auf 220°C, wobei Methanol abdestilliert. Die Übergangstemperatur soll 65°C nicht überschreiten.

Man hält die Temepratur so lange, bis etwa 90 % der theoretischen Methanolmenge abgespalten sind. Die Destillationsdichte darf hierbei 0,792 - 0,799 g/ml (20°C) betragen. Bei einer höheren Dichte ist ein entsprechender Anteil an Propylenglykol dem Reaktionsgut zuzusetzen. Anschließend ist auf 160° - 180°C zu kühlen. Es werden nun 0,37 Mol Adipinsäure und 1 Mol Isophthalsäure zugesetzt und langsam auf 210°C geheizt. Bei 210°C wird verestert, bis ein Schmelzbereich von 50 - 55°C (Kofler-Bank) erreicht ist. Falls dieser Wert nach 3 Stunden nicht erreicht ist, wird unter leichtem Vakuum (500 mbar) weitergearbeitet.

Ab Schmelzbereich 50 - 55°C wird unter einem Vakkum von 150 mbar kondensiert. Nach Erreichen eines Schmelzbereiches von 70 - 75°C Vakuum abstellen, Stickstoff überleiten und auf 170 - 175°C kühlen. Der gebildete Polyester soll nun eine Säurezahl von 5 bis 10 aufweisen. Durch Zusatz von 0,125 Mol Phthalsäureanhydrid wird die Säurezahl des Polyesters auf ca. 100 eingestellt. Nach 30 min. Rühren kann die Schmelze abgefüllt werden.

### Vernetzer C1

Zu 431 g einer Lösung (75 % in Ethylacetat) eines Umsetzungsprodukts aus 3 Mol Toluylendiisocyanat mit 1 Mol Trimethylolpropan (Desmodur L^{R}) werden bei 70°C langsam unter Rühren 160 g Caprolactam zugefügt. Die Reaktionsmischung wird danach bei 70°C gehalten, bis der NCO-Gehalt praktisch auf null gesunken ist.

### Pigmentpaste P1

Es werden 220 g eines Anreibeharzes nach EP-A-0 183 025 Beispiel 5 (90 %) homogen mit 9,6 g Essigsäure (100 %) vermischt und mit 1790 g vollentsalztem Wasser verdünnt. In diese Lösung werden 600 g eines Emulsionspolymerisats nach Beispiel B14 eingerührt und auf einer Perlmühle auf die notwendige Feinheit vermahlen. Die Pigmentpaste hat einen Festkörper von ca. 31 %, ist stabil und dünnviskos.

### Pigmentpaste P2

Es werden 220 g eines Anreibeharzes nach EP-A-0 183 025 Beispiel 5 mit Essigsäure (10,8 g 100 %) vermischt und mit 1790 g vollentsalztem Wasser verdünnt. Hierzu werden 500 g eines Emulsionspolymerisats nach Beispiel B14 und 35 g Dibutylzinndioxid gegeben und auf einer Perlmühle auf die notwendige Feinheit vermahlen. Die Pigmentpaste hat einen Festkörper von ungefähr 28 % und ist dünnviskos.

### Beispiel 1

550 g Bindemittel A1 werden mit 17 g Ameisensäure, 50%ig in vollentsalztem Wasser, 12 g Ruß und 330 g Bindemittel B1 unter einem schnell laufenden Dissolver gut vermischt und auf einer Perlmühle vermahlen, wobei die Temperatur des Mahlgutes nicht über 30 °C steigen darf.
Nach der Vermahlung wird mit voll entsalztem Wasser auf 3 l Gesamtvolumen verdünnt. Anschließend werden 90 g einer Mischung aus 50 % 2-Butoxyethanol und 50 % 2,2,4-Trimethyl-1,3-pentandiolmonoisobutyrat zugegeben. Man erhält ein kathodisches Elektrotauchlackbad (KTL-Bad). Nach Rühren über Nacht werden zinkphosphatierte Stahlbleche 4 Minuten lang bei 30 °C Badtemperatur und 150 Volt Abscheidespannung kathodisch beschichtet.
Die Bleche werden 25 Minuten bei 180 °C Ofentemperatur eingebrannt.
Die eingebrannte Beschichtung ist glatt und zähelastisch. Die Schichtdicke beträgt 21 bis 23 µm.

### Beispiel 2

Aus 672 g Bindemittel A1, 21 g Ameisensäure, 50%ig in Wasser, 62,5 g Titandioxid, 1,5 g Ruß, 200 g Bindemittel B2 und 2043 g voll entsalztem Wasser werden, wie im Beispiel 1 beschrieben, 3 l KTl-Bad hergestellt. In das Bad werden 45 g Hexylglykol eingerührt.
Mit 240 Volt bei 200 Ohm Vorwiderstand werden zinkphosphatierte Stahlbleche kathodisch beschichtet und 20 Minuten bei 185 °C eingebrannt. Die eingebrannte Beschichtung ist glatt und zähelastisch. Die Schichtdicke beträgt 20 bis 22 µm.

### Beispiel 3

508 g Bindemittel A1 werden mit 16 g Ameisensäure, 50%ig in Wasser, 46 g Titandioxid, 1 g Ruß und 152 g Bindemittel B2 unter einem schnell laufenden Dissolver gut vermischt und auf einer Perlmühle vermahlen, wobei die Temperatur im Mahlgut nicht über 30 °C steigen darf.
Nach der Vermahlung werden 277 g voll entsalztes Wasser zugemischt.
Der Lack wird auf zinkphosphatierte Stahlbleche mit 65 µm Naßfilmdicke aufgerakelt und 25 Minuten bei 180 °C eingebrannt.
Der eingebrannte Film ist glatt, glänzend und zähelastisch.
Gleich Ergebnisse erhält man, wenn mit 508 g Bindemittel A2 statt Bindemittel A1 gearbeitet wird.

### Beispiel 4 bis 14

Wie in Beispiel 2 werden KTL-Bäder angesetzt, Bleche beschichtet und eingebrannt, wobei statt Bindemittel B2 die Bindemittel B3 bis B13 verwendet werden.
Alle eingebrannten Beschichten sind hart und elastisch.

### Beispiel 15

Beispiel 2 wird wiederholt. Dabei werden jedoch die 672 g Bindemittel A1 ersetzt durch eine Mischung aus 336 g Bindemittel A1 und 336 g Bindemittel A2. Nach dem Einbrennen erhält man ebenfalls eine glatte zähelastische Beschichtung.

### Beispiel 16

Es werden 675 g Bndemittel nach Beispiel A1 mit 9,0 g Essigsäure und dann langsam unter gutem Mischen mit 816 g vollentsalztem Wasser vermischt.

1333 g dieser Emulsion werden mit 500 g vollentsalztem Wasser verdünnt und langsam mit 774 g der Pigmentpaste P1 versetzt. Es wird mit Wasser auf einen Feststoffgehalt von 20 % verdünnt. Die eingebrannten Beschichtungen geben homogene und elastische Filme.

### Beispiel 17

Es werden 1273 g einer Dispersion nach Beispiel A3 mit 1146 g vollentsalztem Wasser vermischt und langsam mit 581 g Pigmentpaste P1 versetzt. Das KTl-Bad wird mit Hexylglykol auf übliche Beschichtungsbedingungen eingestellt. Beschichtete Bleche werden 25 Minuten bei 150°C eingebrannt und geben einen glatten elastischen Film.

### Beispiel 18

Es werden 1273 g einer Dispersion nach Beispiel A3 mit 1000 g vollentsalztem Wasser vermischt und langsam mit 585 g einer Pigmentpaste P2 versetzt. Der Lack wird mit Hexylglykol auf übliche Beschichtungsbedingungen korrigiert. Beschichtete Bleche werden 20 Minuten bei 160°C eingebrannt und geben einen glatten elastischen Film.

### Beispiel 19

Die Harze nach Beispiel A4 und B15 werden getrennt auf bekannte Weise trocken gemahlen auf eine Kornfeinheit <40 um. Die beiden entstehenden Pulver werden im Massenverhältnis 53:47 A4:B15 homogen miteinander vermischt. Diese Mischung kann dann mit üblichen Aggregaten elektrostatisch appliziert werden. Nach dem Einbrennen bei 150°C entsteht ein dichter und glatter Lackfilm auf der Oberfläche des Substrats.

## Patentansprüche

1. Hitzehärtes Überzugsmittel, enthaltend
A) ein oder mehrere zumindest bei Härtungstemperatur in flüssige oder gelöste Form überführbare Bindemittel mit sauren, basischen oder gleichartig geladenen ionischen Gruppen
B) ein oder mehrere zumindest bei Härtungstemperatur in flüssige oder gelöste Form überführbare Bindemittel mit basischen, - falls (A) saure Gruppen hat -, sauren, - falls (A) basische Gruppen hat -, oder gleichartig geladenen ionischen Gruppen mit zu den ionischen Gruppen von (A) entgegengesetzter Ladung, das bei Lager- und Applikationsbedingungen nicht interdiffundierbar, aber bei Härtungsbedigungen mit dem Bindemittel (A) interdiffundierbar ist wobei mindestens eines der Bindemittel (A) und (B) bei Applikations- und Lagertemperaturen in fester teilchenförmiger Form vorliegt
und
C) gegebenenfalls übliche Lösemittel, Pigmente, und/oder lacktechnisch übliche Hilfs- und/oder Zusatzstoffe, die zu keiner Interdiffusion der Bindemittel (A) und (B) unter Lagerungs- und Applikationsbedingungen führen.

2. Überzugsmittel nach Anspruch 1 enthaltend 90 bis 10 Gew.% Bindemittel (A) und 10 bis 90 Gew.% Bindemittel (B).

3. Überzugsmittel nach Anspruch 1 oder 2, dadurch gekennzeichnet, daß eines der Bindemittel (A) und (B) in flüssiger oder gelöster Form vorliegt und das andere teilchenförmig und bei Lager- und Applikationsbedingungen unlöslich in dem flüssigen anderen Bindemittel oder der Lösung des anderen Bindemittels vorliegt.

4. Überzugsmittel nach Anspruch 1 oder 3, worin das Bindemittel (A) flüssig oder gelöst in einem organischen Lösungsmittel vorliegt, eine zahlenmittlere Molmasse von 300 bis 10000 g/mol bevorzugt von 300 bis 5000 g/mol und mindestens 2, bevorzugt mindestens 3, besonders bevorzugt mindestens 4 kationische oder anionische bzw. basische oder saure Gruppen pro Molekül hat und worin das Bindemittel (B) fest, im Bindemittel (A) oder dessen Lösung bei Lager- und Applikationsbedingungen unlöslich ist und nicht anquellbar vorliegt und eine zahlenmittlere Molmasse von mindestens 2000 g/mol bei mindestens 5, bevorzugt mindestens 30 anionischen oder kationischen bzw. sauren oder basischen Gruppen pro Molekül, hat.

5. Überzugsmittel nach Anspruch 1 oder 2, dadurch gekennzeichnet, daß beide Bindemittel (A) und (B) in Teilchenform vorliegen.

6. Überzugsmittel nach einem der vorhergehenden Ansprüche, dadurch gekennzeichnet, daß es als wäßrige Dispersion vorliegt, wobei eine der Komponenten (A) und (B) fest und teilchenförmig und die andere flüssig und in Wasser dispergierbar vorliegt.

7. Verfahren zur Herstellung von Überzügen durch Auftrag eines Überzugsmittels und anschließende Härtung in der Hitze, dadurch gekennzeichnet, daß als Überzugsmittel eines der Ansprüche 1 bis 6 verwendet wird.

8. Verfahren nach Anspruch 7, dadurch gekennzeichnet, daß es mit dem Überzugsmittel nach Anspruch 5 durchgeführt wird und der Auftrag auf ein elektrisch leitfähiges Substrat durch Elektrotauchabscheidung erfolgt.

## Claims

1. Heat-curable coating composition containing
A) one or more binders which at least at the curing temperature may be converted into a liquid or dissolved form, which binders have acid, basic or identically charged ionic groups,
B) one or more binders, which at least at the curing temperature may be converted into a liquid or dissolved form, which binders have basic groups -if (A) has acid groups-, acid groups -if (A) has basic groups - or identically charged ionic groups with the opposite charge to the ionic groups of (A) and which, under storage and application conditions, are not interdiffusible with binder (A), but are interdiffusible under curing conditions, wherein at least one of the binders (A) and (B) is present at application and storage temperatures in solid particulate form
and
C) optionally conventional solvents, pigments and/or auxiliary substances and additives usual in the lacquers industry, which do not give rise to interdiffusion of binders (A) and (B) under storage and application conditions.

2. Coating composition according to claim 1 containing 90 to 10 wt.% of binders (A) and 10 to 90 wt.% of binder (B).

3. Coating composition according to claim 1 or 2, characterised in that one of the binders (A) and (B) is present in liquid or dissolved form and the other is present in the other liquid binder or solution of the other binder in particulate form and is insoluble under storage and application conditions.

4. Coating composition according to claim 1 or 3, in which the binder (A) is present as a liquid or dissolved in an organic solvent, has a number average molar mass of 300 to 10000 g/mole, preferably 300 to 5000 g/mole and at least 2, preferably at least 3, particularly preferably at least 4 cationic or anionic, or basic or acid groups per molecule, and in which binder (B) is solid, is insoluble in binder (A) or its solution under storage and application conditions, is unswellable and has a number average molar mass of at least 2000 g/mole with at least 5, preferably at least 30 anionic or cationic, or acid or basic groups per molecule.

5. Coating composition according to claim 1 or 2, characterised in that both binders (A) and (B) are present in particulate form.

6. Coating composition according to one of the preceding claims, characterised in that it is an aqueous dispersion, wherein one of the components (A) and (B) is solid and particulate and other is liquid and dispersible in water.

7. Process for the production of coatings by application of a coating composition and subsequent heat curing, characterised in that a coating composition according to one of claims 1 to 6 is used.

8. Process according to claim 7, characterised in that it is performed with the coating composition according to claim 5 and application proceeds by electrodeposition onto an electrically conductive substrate.

## Revendications

1. Agent de revêtement durcissable à la chaleur, comportant
A) un ou plusieurs agents liants qui peuvent être transformés, au moins à la température de durcissement, en une forme liquide ou dissoute, ces agents ayant des groupes acides, basiques ou ioniques de même charge
B) un ou plusieurs agents liants qui peuvent être transformés, au moins à la température de durcissement, en une forme liquide ou dissoute, ces agents ayant des groupes basiques - si (A) a des groupes acides - , acides - si (A) a des groupes basiques- , ou ioniques de même charge, ces groupes ayant une charge opposée à celle des groupes ioniques de (A), ces agents, dans les conditions de stockage et d'application, ne pouvant pas diffuser mutuellement avec l'agent (A) mais pouvant diffuser mutuellement avec l'agent (A) dans les conditions de durcissement, au moins un des liants (A) et (B) se présentant sous forme de particules solides aux températures d'application et de stockage, et
C) éventuellement des solvants habituels, des pigments habituels, et/ou des adjuvants et/ou additifs habituels dans la technique des vernis, ne conduisant à aucune diffusion mutuelle des liants (A) et (B) dans les conditions de stockage et d'application.

2. Agent de revêtement selon la revendication 1, comportant de 90 à 10% en poids d'agent liant (A) et de 10 à 90% en poids d'agent liant (B).

3. Agent de revêtement selon l'une des revendications 1 ou 2, caractérisé en ce que l'un des agents liants (A) et (B) se présente sous forme liquide ou dissoute et l'autre se présente sous forme de particules en étant insoluble dans l'autre agent liant liquide ou dans la solution de l'autre agent liant, dans les conditions de stockage et d'application.

4. Agent de revêtement selon l'une des revendications 1 ou 3, où l'agent liant (A) se présente sous une forme liquide ou dissoute dans un solvant organique, il a une masse molaire moyenne en nombre de 300 à 10 000 g/mole, de préférence de 300 à 5000 g/mole, et au moins 2, de préférence au moins 3, de façon particulièrement préférée au moins 4 groupes cationiques ou anioniques,
ou basiques ou acides, par molécule, et où l'agent liant (B) est solide et insoluble dans l'agent liant (A) ou dans sa solution,ou non gonflable dans l'agent liant (A) ou dans la solution de celui-ci, dans les conditions de stockage et d'application, et il a une masse molaire moyenne en nombre d'au moins 2000 g/mole, avec au moins 5, de préférence au moins 30, groupes anioniques ou cationiques, ou acides ou basiques, par molécule.

5. Agent de revêtement selon l'une des revendications 1 ou 2, caractérisé en ce que les deux agents liants (A) et (B) se présentent sous la forme de particules.

6. Agent de revêtement selon l'une des revendications précédentes, caractérisé en ce qu'il se présente sous la forme d'une dispersion aqueuse, l'un des composants (A) et (B) étant sous la forme de particules solides et l'autre étant sous une forme liquide dispersable dans l'eau.

7. Procédé pour préparer des revêtements par application d'un agent de revêtement suivie d'un durcissement à la chaleur, caractérisé en ce que l'on utilise comme agent de revêtement un de ceux qui correspondent aux revendications 1 à 6.

8. Procédé selon la revendication 7, caractérisé en ce qu'il est mis en oeuvre avec l'agent de revêtement conforme à la revendication 5, et l'application est réalisée sur un substrat conducteur de l'électricité en effectuant un dépôt par trempage électrophorétique.
